# EUROPEAN PATENT SPECIFICATION

(11) **EP 0 797 082 B1**
(45) Date of publication and mention of the grant of the patent: **29.10.2003**
(21) Application number: 97200793.4
(22) Date of filing: 17.03.1997
(51) Int. Cl.: G01G 19/12, G01G 23/00, A01C 17/00, A01C 15/00, A01B 59/043

(54) **Spreader with weight measurement**
Streuer mit Gewichtsmessung
Epandeur avec mesure du poids

(30) Priority: 21.03.1996 NL 1002681
(43) Date of publication of application: 24.09.1997
(73) Proprietor: Greenland Nieuw-Vennep B.V., 2153 LR Nieuw-Vennep (NL)
(72) Inventor: Mijnders, Gijsbert Jan, 2161 KE Lisse (NL); van de Voort van de Kley, Antonius Theodorus Maria, 2181 XR Hillegom (NL)
(74) Representative: Hoorweg, Petrus Nicolaas

(56) References cited:
- EP-A- 0 287 165
- EP-A- 0 303 325
- EP-A- 0 407 705
- EP-A- 0 537 857
- EP-A- 0 650 661
- DE-A- 3 714 642

## Description

The invention relates to a device for disseminating granular or powder-form material, in particular fertilizer or herbicide/pesticide used in agriculture, said device comprising a frame carried by a vehicle, and carrying a supply container for the material to be disseminated and a mechanism for spreading said material, wherein at least one sensor operative between the frame and the supply container is arranged for measuring the own and the filling weight of the supply container, wherein the or each sensor is included in a signal processing and display circuit.

Devices of the type described in the preamble and disclosed in EP-A-0537857 are used to spread for instance fertilizer over the land as uniformly as possible, which land is of course not only uneven but can moreover run at a slope. However, in the per se known weight measurements in these devices, wherein the weight of the device is measured continuously using a load cell at the three-point suspension of the agricultural tractor, irregular measurements occur because of this inclining position resulting from slopes respectively the uneven terrain resulting from ploughing. Such devices are relatively heavy and hang at a great distance outside the three-point suspension, which has a very adverse effect on the measurements.

EP-A-0 407 705 discloses a weighing machine for an agricultural tractor.

The invention has for its object to provide a device with which the above mentioned drawbacks are obviated.

The device according to the invention is distinguished in that the or each weight sensor is arranged directly under the supply container which is mounted separately of the spreading mechanism.

Because now the or each weight sensor is arranged directly under the supply container, which is mounted separately of the spreading mechanism, and therefore continuously measures only the own weight and the filling weight of the supply container, the problems as referred to above are largely prevented. There is in any case no reaction arm causing an increased variation in the measurements when driving over uneven fields or undesired turning moments caused by the drive forces via the power take-off of the tractor.

The weight sensors can take any desired form suitable for the purpose of enabling continuous measurement of the filling weight. In the preferred embodiment however, the invention proposes to use a so-called load cell as sensor, i.e. the relative displacement between the supply container and the frame is measured. This can take place mechanically, electrically, electronically, optically or in other known manner, but the invention preferably proposes to embody the measuring member as a bending arm, which is connected at the one end to the frame and at the other end to the supply container wherein a strain gauge circuit is placed between the ends. These strain gauges form part of the whole monitoring and calculation system, wherein the driver can follow precisely the decrease in weight from the tractor cab and wherein the driver can optionally adjust the distribution. The measurement and adjustment system however preferably forms part of the control system, in which an adjusting motor, for instance an actuator, for the dosing member is also arranged, whereby the adjusted and desired value for the distribution is followed as accurately as possible.

Finally, the invention proposes to provide the frame with a bending arm sensor which is only connected at one end to the frame and is free at the other end. This sensor serves as reference sensor in the measurement and adjustment system.

By means of a special design of the passage openings in the dosing mechanism an ideal quadratic function for the material flow can be obtained which facilitates the dosage setting by means of the processing unit of the measurement and adjustment system.

Above mentioned and other features will be further elucidated hereinbelow with reference to a number of embodiments. In the annexed drawing:
fig. 1 shows a perspective top view of a spreading device according to the invention in the form of a reciprocating spout broadcaster which is suspended from the three-point suspension of an agricultural tractor;
fig. 2 is a schematic view of the weight sensor circuit applied in the device of fig. 1;
fig. 3 shows a perspective view corresponding with fig. 1 of a second embodiment of a spreader in the form of a double broadcaster;
fig. 4 shows a diagram corresponding with fig. 2 of the circuit in the device of fig. 3; and
fig. 5, 6 and 7 show perspective details of a weight sensor in mounted situation between the supply container and the frame and in the form of a bending arm,
fig. 8 shows a perspective view of a dosing mechanism according to the invention,
fig. 9 shows a graph representing the ratio of material flow/surface area of discharge opening.

In the figures the numeral 1 designates the device disseminating granular or powder-form material, such as fertilizer or herbicide/pesticides etc. which in agriculture are usually spread over the land. The device comprises a frame 2 in the form of two L-shaped tubes 3 which are mutually connected at the top by a peripheral tube 4, a shore 5, wherein this latter extends between the horizontal leg of tube 2 and the upper tube, a support plate 6 on which a reciprocating mechanism 7 is supported. Above the reciprocating mechanism lies a supply container 8 which here takes the form of an open hopper-like container, the outer edge 9 of which rests on the peripheral frame tube 4 via weight sensors to be elucidated further hereinbelow.

The frame is coupled via the known fixing means to the three-point suspension 10 of an agricultural tractor 11. The reciprocating mechanism 7 is driven via an intermediate shaft 12 by a power take-off 13 of the agricultural tractor.

Placed between supply container 8 and reciprocating mechanism 7 is a dosing member 14, which can be adjusted by a dosage adjusting mechanism 15 which can be adjusted by a control or adjusting motor 16. The adjusting motor is an actuator which can be electrically energized in very precise manner, whereby a very precise linear displacement can be obtained. This linear movement can be monitored by means of a potentiometer, whereby calibration is simplified and the location of the dosing mechanism as well as the position thereof can be determined.

Supply container 8 is filled with a quantity of granular material K which causes a determined filling weight.

Arranged according to the invention between the upper edge of supply container 8 and the peripheral frame tube 4 is a weight sensor 20, three of which are applied here.

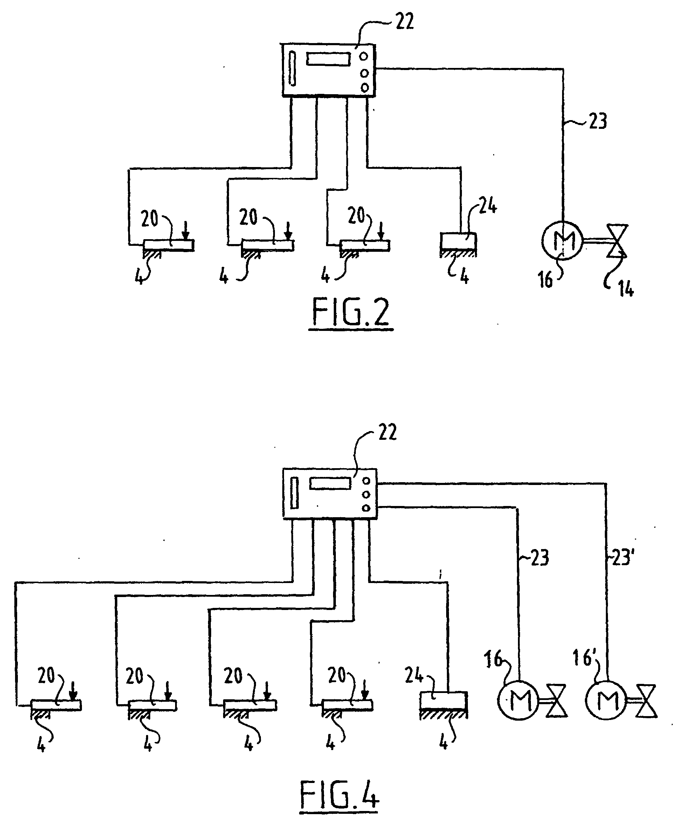

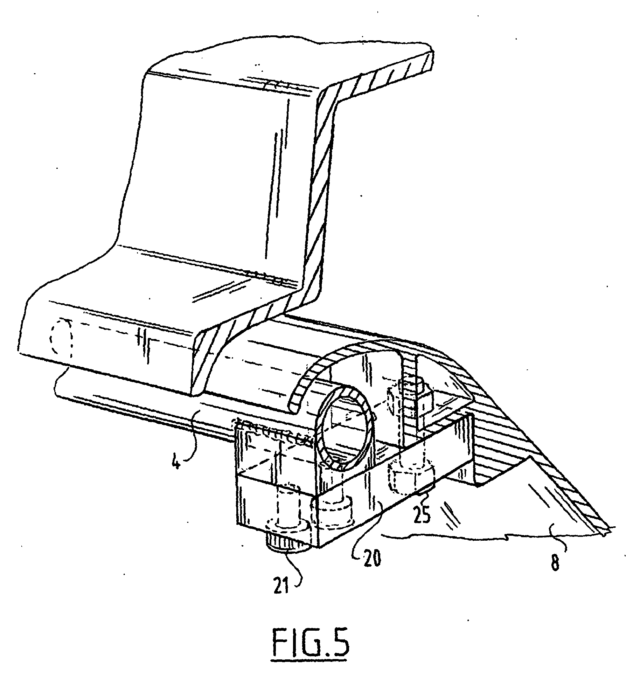

In fig. 2 the weight sensors 20 are shown schematically, which weight sensors preferably consist of a bending arm, the one end of which is connected to frame tube 4 and the other end to the edge of supply container 8, see also fig. 5. The connection can be effected in simple manner by socket or screw bolts 21 respectively 22, wherein it is noted that strain gauges are accommodated in known manner in bending arm 20 which can measure the deflection of the arm. The measurement signal is fed to a central processing unit 22, see fig. 2, which can be placed in the cab of tractor 11. The signal processing unit 22 sends a signal via line 23 to the control or adjusting motor 16 of dosing mechanism 14.

It is noted that a free bending arm 24 which serves as reference sensor can be mounted at a random location on the frame, here on the support beam for the control or adjusting motor 16 or on the supply container.

This reference sensor 24 is in fact unloaded by its own weight and only follows the adverse error effects resulting from shaking or the inclining position of the device. The signal processing takes place in the central processing unit 22 and thereby corrects the measurement signals of bending arms 20. In this manner the change in the filling weight of supply container 8 can be followed very quickly, directly and accurately and the dosage can thus be readjusted very precisely via the control or adjusting motor 16 and the dosing mechanism 14.

The central processing unit 22 can of course be provided with other input signals, for instance the driving speed of the tractor, wherein the type of material for disseminating, the weather condition factors as well as the desired nominal distribution are entered manually.

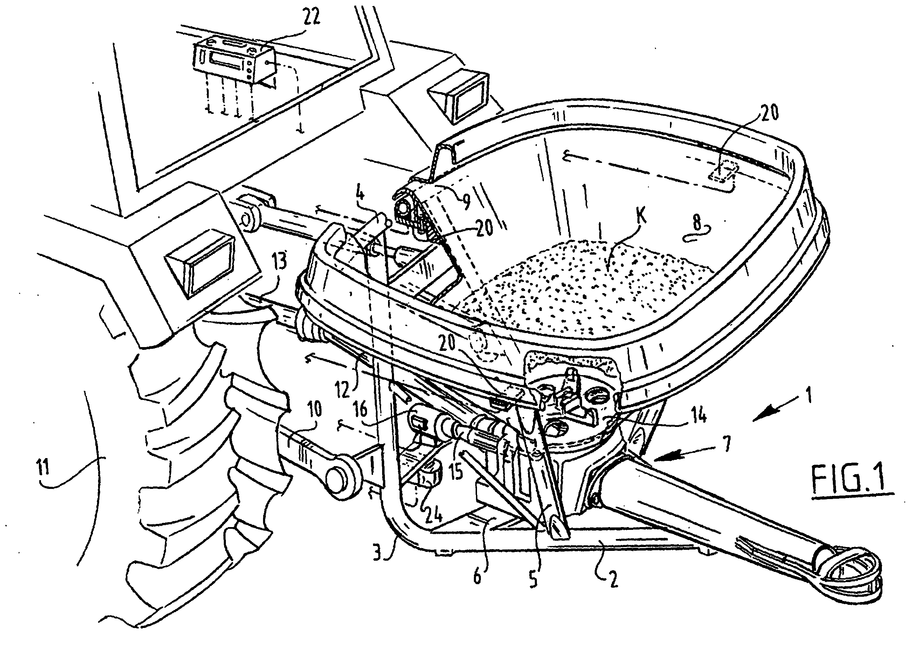

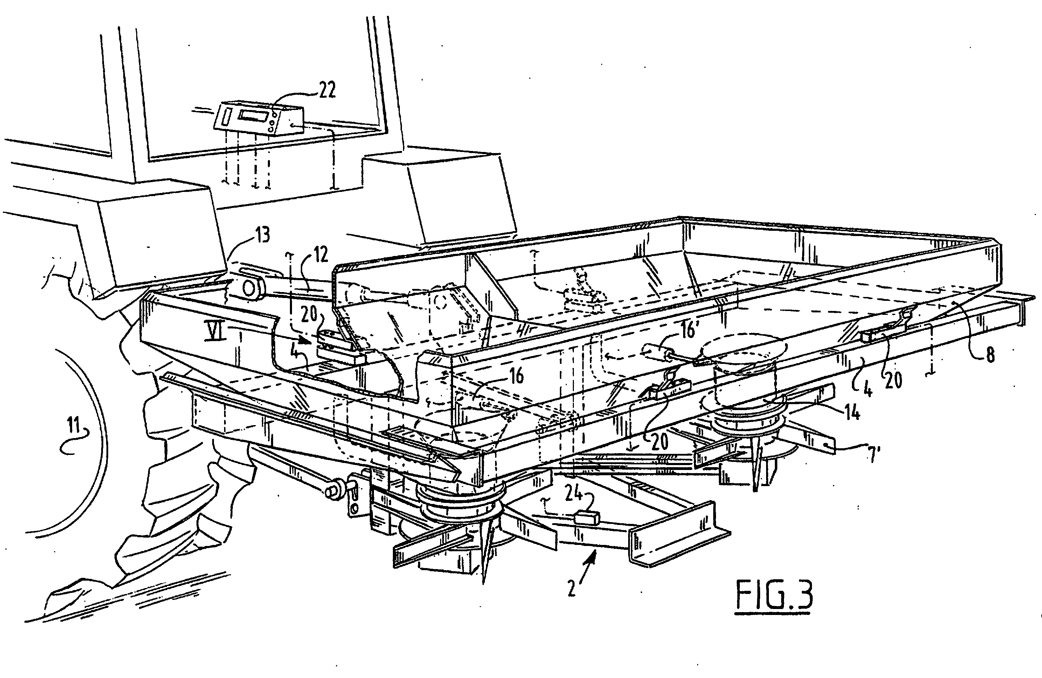

Fig. 3 shows a second embodiment of the spreading device, wherein the same reference numerals as in fig. 1 are used for the same components.

Here also a frame is embodied with a peripheral profile beam 4 on which the upper edge of supply container 8 supports. Supply container 8 is embodied here as a double hopper-like container, each with its own passage opening onto which connects a dosing mechanism 14 under which a rotating broadcaster 7' is arranged. The dosing mechanism is adjusted by a control or adjusting motor 16. In this embodiment four bending arm sensors are arranged, see also fig. 4, the measurement signals of which are fed to a central processing unit 22. The central processing unit sends signals via lines 23 and 23' to the control or adjusting motors 16, 16' coupled thereto, in order to adjust the associated dosing mechanism. Also arranged here is a reference sensor 24 which is arranged on a beam of frame 2, preferably in the central longitudinal plane or at the centre of gravity of the separate tub.

In this embodiment a left/right measurement can be performed due to inclusion of the sensors in a separate circuit, so that the weight of the left-hand respectively right-hand container can be determined separately, thus enabling a separate, accurate adjustment of both dosing mechanisms.

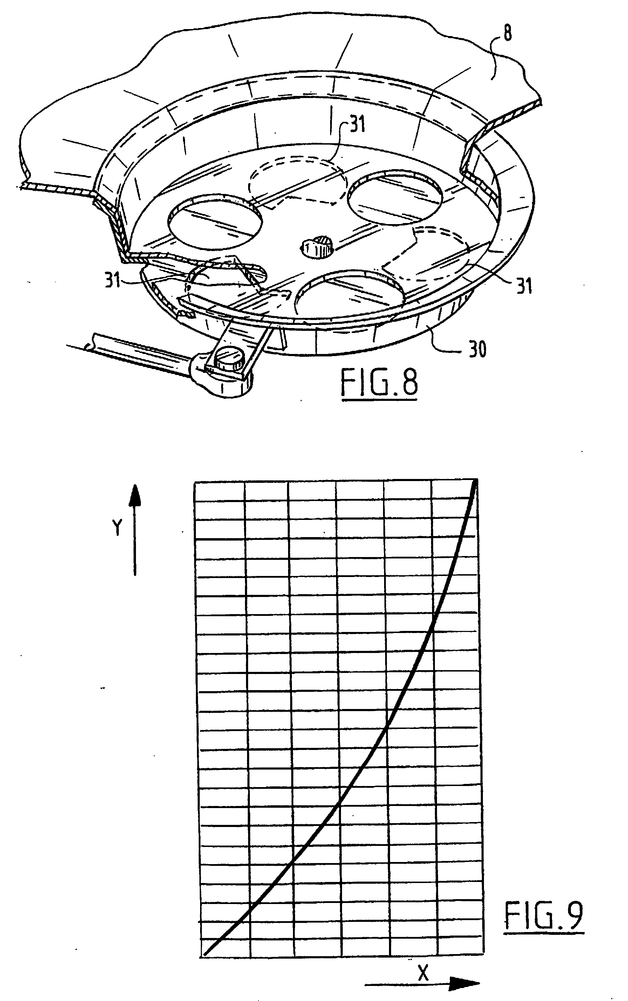

In order to facilitate the dosing with the control or adjusting motor 16, which is actuated via the central processing unit, it is recommended to adapt the peripheral boundaries of the passage openings of the dosing mechanism, which can for instance be embodied as according to fig. 8, such that the ratio between the material flow and the area of the passage opening progresses in accordance with a quadratic function. This simplifies the calculation formula with which the software of the central processing unit is provided.

In fig. 8 can be seen that the dosing mechanism consists of a dish-shaped disc 30, in the base of which are formed three passage openings 31. The base of the supply container has three corresponding passage openings, which however have a circular shape so that when disc 30 is rotated the holes more or less overlap each other. By providing openings 31 with a contour line 32 as peripheral boundary, the area of the passage opening for the material flow can be changed by rotating disc 30 such that the function between the material flow and the area of the passage opening progresses quadratically, i.e. according to the formula y = ax², wherein y represents the material flow and x the angular adjustment of arm 32 which is coupled to the adjusting motor.

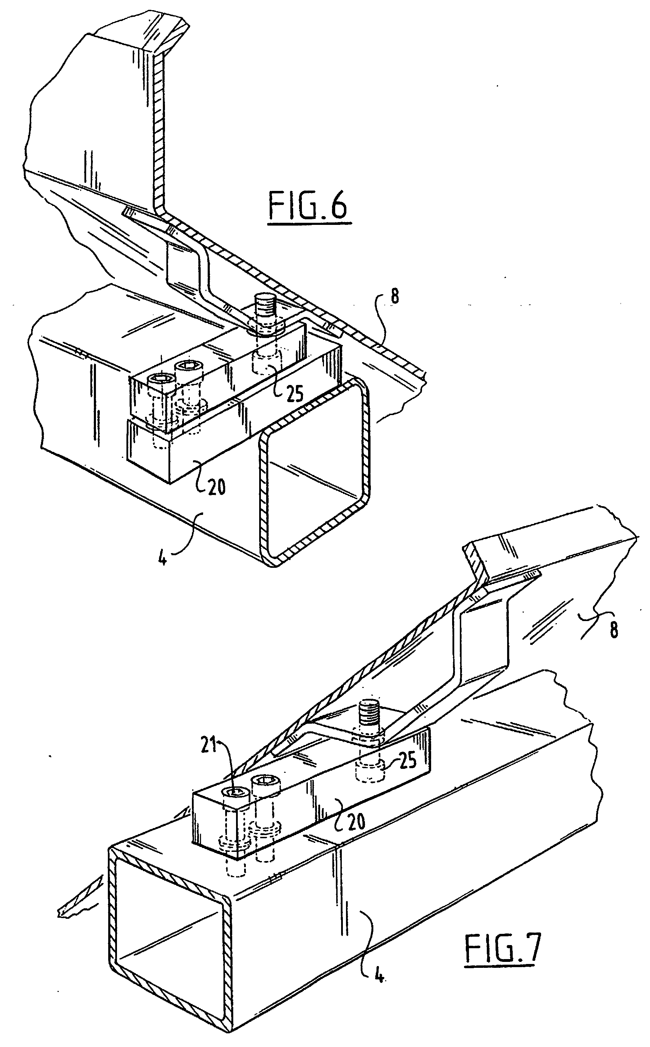

It is noted that both in the embodiment of fig. 1 and that of fig. 2 the arms of the weight sensors occupy different spatial positions. They are situated at the front in the travel direction of the tractor and at the rear perpendicular thereto, see also fig. 6 and 7. This arrangement ensures a more rigid construction of the relatively heavy supply container with filling (3000 kilos) whereby lateral forces as a result of bends can be easily compensated by the rear bending arms, while braking and acceleration forces can be absorbed by the front bending arms.

It is further noted that the two or more weight sensors lie precisely in one plane, which makes the measurement more accurate. The reference sensor does not have to lie in that plane but must extend parallel thereto.

The invention is not limited to the above described embodiments. The sensors do not therefore have to take the form of bending arms, but any suitable sensor for detecting the relative displacement of the supply container relative to the frame can be applied. It is further unnecessary to use a plurality of weight sensors, but the supply container can for instance be supported hingedly with the frame beam at least at two points wherein only one sensor is arranged at a distance from the hinges between supply container and frame.

The reference sensor can be replaced by including in the processing unit on the spreader a so-called Integrated Circuit sensor for Acceleration and Gradient measurement. The known weight is dispensed with here. If the processing unit is not placed directly on the spreader, this IC must be placed on a separate module which is connected to a processing unit placed elsewhere.

## Claims

1. Device for disseminating granular or powder-form material, in particular fertilizer or herbicide/pesticide used in agriculture, said device comprising a frame (2) carried by a vehicle (11), and carrying a supply container (8) for the material to be disseminated and a mechanism (7) for spreading said material, wherein at least one sensor (20) operative between the frame and the supply container is arranged for measuring the own and the filling weight of the supply container, wherein the or each sensor is included in a signal processing and display circuit (22), **characterized in that** the or each weight sensor is arranged directly under the supply container which is mounted separately of the spreading mechanism.

2. Device as claimed in claim 1, **characterized in that** the sensor consists of a member measuring the relative displacement of the supply container relative to the frame.

3. Device as claimed in claim 2, **characterized in that** the measuring member is embodied as a bending arm which is connected at the one end to the frame and at the other end to the supply container and which is provided with a strain gauge circuit between the ends.

4. Device as claimed in claim 3, **characterized in that** at least three bending arm sensors are arranged, wherein the bending arms are placed in differing directions under the supply container.

5. Device as claimed in any of the claims 1-4, **characterized in that** the two or more sensors are arranged in one plane.

6. Device as claimed in any of the foregoing claims, **characterized in that** at least one sensor connected only to the frame and incorporated in the circuit is arranged as reference sensor.

7. Device as claimed in any of the foregoing claims, **characterized in that** at least one sensor coupled only to the supply container and incorporated in the circuit is arranged as reference sensor.

8. Device as claimed in claim 6 or 7, **characterized in that** the reference sensor extends parallel to the plane through the sensors.

9. Device as claimed in any of the foregoing claims, **characterized in that** the spreading mechanism is embodied as reciprocating spout broadcaster.

10. Device as claimed in any of the foregoing claims, wherein the supply container is a hopper-like container and the frame a tube system, **characterized in that** a peripheral tube runs along the upper edge part of the container and the bending arm sensors fixed to the tube support the upper edge part.

11. Device as claimed in any of the foregoing claims, **characterized in that** in the case of more than three sensors these are arranged individually or in groups in their own measuring circuit in order to separately determine part-weights, for instance left/right weights.

12. Method of disseminating material from a device as claimed in any of the foregoing claims movable over the land and carried by a vehicle, wherein use is made of a controllable distribution setting for the material for disseminating, and the signal processing circuit continually adjusts the distribution setting on the basis of the weight change signal.

13. Method as claimed in claim 12, wherein use is made of a dosing mechanism with overlapping slidable discharge openings, and the edges of the discharge openings are formed in accordance with a contour line such that the ratio between the material flow and the area of the passage opening progresses in accordance with a quadratic function.

14. Method as claimed in claim 13, wherein the circuit is also supplied with a driving speed signal.

## Patentansprüche

1. Vorrichtung zur Ausbreitung von granularem oder pulverförmigem Material, insbesondere von Düngemitteln oder Herbiziden/Pestiziden, die in der Landwirtschaft benutzt werden, wobei die Vorrichtung folgende Teile umfasst: einen Rahmen (2), der von einem Fahrzeug (11) getragen wird und seinerseits einen Vorratsbehälter (8) für das auszubreitende Material trägt und einen Mechanismus (7) zur Ausbreitung des Materials, wobei wenigstens ein Sensor (20) betriebsmäßig zwischen dem Rahmen und dem Vorratsbehälter angeordnet ist, um das Eigengewicht und das Füllgewicht des Vorratsbehälters zu messen und wobei der oder jeder Sensor in einer Signalverarbeitungs- und Darstellungsschaltung (22) angeordnet ist,
**dadurch gekennzeichnet, dass** der oder jeder Gewichtssensor direkt unter dem Vorratsbehälter angeordnet ist, der getrennt vom Ausbreitungsmechanismus montiert ist.

2. Vorrichtung nach Anspruch 1,
**dadurch gekennzeichnet, dass** der Sensor aus einem Glied besteht, das die relative Versetzung des Vorratsbehälters relativ zum Rahmen misst.

3. Vorrichtung nach Anspruch 2,
**dadurch gekennzeichnet, dass** das Messglied als Biegearm ausgebildet und an einem Ende mit dem Rahmen und mit dem anderen Ende mit dem Vorratsbehälter verbunden ist und zwischen den Enden einen Dehnungsmessstreifen trägt.

4. Vorrichtung nach Anspruch 3,
**dadurch gekennzeichnet, dass** wenigstens drei Biegearmsensoren vorgesehen sind, wobei die Biegearme in unterschiedlichen Richtungen unter dem Vorratsbehälter angeordnet sind.

5. Vorrichtung nach einem der Ansprüche 1 bis 4,
**dadurch gekennzeichnet, dass** die zwei Sensoren oder mehrere Sensoren in einer Ebene angeordnet sind.

6. Vorrichtung nach einem der vorhergehenden Ansprüche,
**dadurch gekennzeichnet, dass** wenigstens ein Sensor nur mit dem Rahmen verbunden und in der Schaltung als Bezugssensor angeordnet ist.

7. Vorrichtung nach einem der vorhergehenden Ansprüche,
**dadurch gekennzeichnet, dass** wenigstens ein Sensor nur mit dem Vorratsbehälter gekoppelt ist und in der Schaltung als Bezugssensor angeordnet ist.

8. Vorrichtung nach den Ansprüchen 6 oder 7,
**dadurch gekennzeichnet, dass** der Bezugssensor sich parallel zu der Ebene erstreckt, in der die Sensoren liegen.

9. Vorrichtung nach einem der vorhergehenden Ansprüche,
**dadurch gekennzeichnet, dass** der Ausbreitungsmechanismus als hin- und hergehende Breitsaat-Maschine ausgebildet ist.

10. Vorrichtung nach einem der vorhergehenden Ansprüche, bei welcher der Vorratsbehälter ein trichterartiger Behälter ist und der Rahmen aus einem Rohrsystem besteht,
**dadurch gekennzeichnet, dass** ein Umfangsrohr längs des Oberrandteiles des Behälters verläuft und die Biegearmsensoren an dem Trägerrohr des oberen Randteiles festgelegt sind.

11. Vorrichtung nach einem der vorhergehenden Ansprüche,
**dadurch gekennzeichnet, dass** im Falle von mehr als drei Sensoren diese individuell oder in Gruppen in ihrer eigenen Messschaltung angeordnet sind, um getrennt Gewichtsteile, beispielsweise Gewichte auf der linken oder rechten Seite, zu bestimmen.

12. Verfahren zur Ausbreitung von Material durch eine Vorrichtung gemäß einem der vorhergehenden Ansprüche, die über das Land beweglich und von einem Fahrzeug getragen ist, wobei eine steuerbare Ausbreitungseinstellung für das Material, das ausgebreitet werden soll, vorgesehen ist und die SignalVerarbeitungsschaltung kontinuierlich die Verteilungseinstellung auf der Basis des Gewichtsänderungssignals einstellt.

13. Verfahren nach Anspruch 12, bei welchem ein Dosierungsmechanismus mit überlappenden, gleitbaren Abgabeöffnungen benutzt wird und die Ränder der Abgabeöffnungen gemäß einer Konturlinie derart geformt sind, dass das Verhältnis zwischen dem Materialfluss und der Fläche der Ausgabeöffnung gemäß einer quadratischen Funktion zunimmt.

14. Verfahren nach Anspruch 13, bei welchem die Schaltung außerdem mit einem Antriebs-Geschwindigkeitssignal gespeist wird.

## Revendications

1. Dispositif pour disséminer un matériau granulaire ou sous forme pulvérulente, en particulier des engrais ou des herbicides/pesticides utilisés dans l'agriculture, ledit dispositif comprenant un châssis (2) porté par un véhicule (11) et portant un récipient d'alimentation pour le matériau à disséminer et un mécanisme (7) pour épandre ledit matériau dans lequel au moins un capteur agissant entre le châssis et le récipient d'alimentation est agencé pour mesurer le poids propre et le poids de remplissage du récipient d'alimentation dans lequel le ou chaque capteur est inclus dans un circuit de traitement de signal et d'affichage (22) et **caractérisé en ce que** le ou chaque capteur est agencé directement sous le récipient d'alimentation qui est monté séparément du mécanisme d'épandage.

2. Dispositif selon la revendication 1, **caractérisé en ce que** le capteur est formé d'un organe mesurant le déplacement relatif du récipient d'alimentation par rapport au châssis.

3. Dispositif selon la revendication 2, **caractérisé en ce que** l'organe de mesure est réalisé sous la forme de bras de flexion relié, à une extrémité, au châssis et, à l'autre extrémité, au récipient d'alimentation, et muni d'un circuit à jauge de contrainte entre les extrémités.

4. Dispositif selon la revendication 3, **caractérisé en ce qu'**au moins trois capteurs de bras de flexion sont prévus, dans lequel les bras de flexion sont placés en des sections différentes au-dessous du récipient d'alimentation.

5. Dispositif selon l'une quelconque des revendications 1 à 4, **caractérisé en ce que** les deux capteurs ou plus sont agencés dans un plan.

6. Dispositif selon l'une quelconque des revendications précédentes, **caractérisé en ce qu'**au moins un capteur, connecté uniquement au châssis et incorporé dans le circuit, est agencé en tant que capteur de référence.

7. Dispositif selon l'une quelconque des revendications précédentes, **caractérisé en ce qu'**au moins un capteur, couplé uniquement au récipient d'alimentation et incorporé dans le circuit, est agencé en tant que capteur de référence.

8. Dispositif selon la revendication 6 ou 7, **caractérisé en ce que** le capteur de référence s'étend parallèlement au plan passant par les capteurs.

9. Dispositif selon l'une quelconque des revendications précédentes, **caractérisé en ce que** le mécanisme d'épandage est réalisé sous la forme d'éjecteur à versement à mouvement alternatif.

10. Dispositif selon l'une quelconque des revendications précédentes, dans lequel le récipient d'alimentation est un récipient analogue à une trémie et le châssis est un système tubulaire, **caractérisé en ce qu'**un tube périphérique s'étend sur la partie de bordure supérieure du récipient et les capteurs de bras de flexion fixés au tube supportent la partie de bordure supérieure.

11. Dispositif selon l'une quelconque des revendications précédentes, **caractérisé en ce que**, dans le cas où l'on a plus de trois capteurs, ceux-ci sont agencé individuellement ou par groupes dans leur propre circuit de mesure, de manière à déterminer séparément des poids partiels, par exemple des poids gauche/droite.

12. Procédé de dissémination de matériau depuis un dispositif tel qu'indiqué dans l'une quelconque des revendications précédentes, déplaçable sur le terrain et porté par un véhicule, dans lequel on utilise un réglage de distribution pouvant être commandé pour le matériau à disséminer et le circuit de traitement de signal ajustant de façon continue le réglage de distribution, en se basant sur le signal de changement de poids.

13. Procédé selon la revendication 12, dans lequel on utilise un mécanisme de dosage ayant des ouvertures de décharge coulissantes avec chevauchement et les bords des ouvertures de décharge sont formés selon une ligne de contour, de manière que le rapport, entre l'écoulement de matériau et l'aire de l'ouverture de passage, aille en progressant selon une fonction quadratique.

14. Procédé selon la revendication 13, dans lequel le circuit est également alimenté par un signal de vitesse d'entraînement.
